# EUROPEAN PATENT APPLICATION

(11) **EP 4 570 534 A1**
(43) Date of publication of application: **18.06.2025**
(21) Application number: 24217490.2
(22) Date of filing: 04.12.2024
(51) Int. Cl.: B60C 23/00

(54) **METHOD AND DEVICE FOR REGULATING A TIRE PRESSURE OF A VEHICLE AND STORAGE MEDIUM**

(30) Priority: 14.12.2023 CN 202311722612
(71) Applicant: Volvo Car Corporation, 405 31 Göteborg (SE)
(72) Inventor: FAN, Hongjun, Shanghai, 201815 (CN); FENG, Xiaogang, Shanghai, 201815 (CN); ZHANG, Cong, Shanghai, 201815 (CN)
(74) Representative: Maiwald GmbH

(57) **Abstract**

The application discloses a method and device for regulating a tire pressure (P) of a vehicle and a storage medium. The method comprises: setting tire pressure modes each defining a reference tire pressure (S); acquiring information comprising a value of a vehicle speed (V) and a value of the tire pressure (P), a weather condition, a route, a predicted road condition and an energy state of the vehicle; selecting one tire pressure mode; determining a value of the reference tire pressure (S); and determining a difference for regulating the tire pressure (P). In some of the tire pressure modes, the reference tire pressure (S) is defined as a function of the vehicle speed (V) and has a lower value when the vehicle speed (V) increases within a specified range and a higher value when the vehicle speed (V) decreases within the specified range.

## Description

### TECHNICAL FIELD

The application relates to the field of vehicle technology and more particularly to a method and device for regulating a tire pressure of a vehicle and a storage medium.

### BACKGROUND

Nowadays, a vehicle can utilize a system for actively regulating a tire pressure of a vehicle tire while the vehicle is driving. It is a challenge to utilize the system safely and cost effectively and to meet different tire pressure requirements from different vehicles, users and environments.

### SUMMARY

One object of the application is to provide a method and device for regulating a tire pressure of a vehicle and a storage medium that can be utilized safely and cost effectively and to meet different tire pressure requirements from different vehicles, users and environments.

In one aspect of the application, there is provided a method for regulating a tire pressure of a vehicle, comprising: setting a plurality of tire pressure modes, wherein each of the plurality of tire pressure modes defines a reference tire pressure; acquiring information comprising a value of a vehicle speed and a value of the tire pressure while the vehicle is driving, a weather condition, a route to be followed by the vehicle, a predicted road condition on the route, and an energy state of the vehicle; selecting one tire pressure mode from the plurality of tire pressure modes and determining a value of a reference tire pressure in the one tire pressure mode based on the information; and determining a difference between the acquired value of the tire pressure and the determined value of the reference tire pressure for regulating the tire pressure, in some of the plurality of tire pressure modes, the reference tire pressure is defined as a function of the vehicle speed and has a lower value when the vehicle speed increases within a specified range and a higher value when the vehicle speed decreases within the specified range.

In another aspect of the application, there is provided a device for regulating a tire pressure of a vehicle, comprising: a processor; and a memory coupled to the processor, the memory storing executable instructions, wherein the processor is configured to execute the executable instructions to implement the method.

In yet another aspect of the application, there is provided a machine-readable storage medium storing executable instructions configured to implement, when executed by a processor, the method.

In the application, the tire pressure is flexibly regulated by setting the plurality of tire pressure modes that are applicable when various weather conditions, road conditions, energy states of the vehicle, and the specific route occur. In the some of the plurality of tire pressure modes the reference tire pressure is defined as a function of the vehicle speed and has the lower value when the vehicle speed increases within the specified range and the higher value when the vehicle speed decreases within the specified range, thereby ensuring the safety and compliance of the vehicle. The custom tire pressure mode specifies its reference tire pressure as comprising the plurality of custom reference values when the vehicle speed reaches the specified value, thereby offering a user with an option to independently regulate the reference tire pressure while ensuring the user's safety in the vehicle. The protection tire pressure mode prevents a tire burst. The compensation tire pressure mode mitigates an impact of the increment in the vehicle load relative to the load threshold on the tire pressure's performance. The tire pressure limit is utilized when the vehicle is in a parked state for a long time, thereby preventing a permanent deformation of the tire.

Further features of the application and advantages thereof are provided in the following detailed description of exemplary embodiments according to the application with reference to the attached drawings.

### BRIEF DESCRIPTION OF THE DRAWINGS

The attached drawings, which are incorporated in and constitute a part of the specification, illustrate the embodiments of the present disclosure and, together with the description thereof, serve to explain the principles of the present disclosure.
FIG. 1 is a schematic diagram of a system for regulating a tire pressure of a vehicle in an embodiment of the application.
FIG. 2 is a schematic diagram of a device for regulating a tire pressure of a vehicle in an embodiment of the application.
FIG. 3 is a flow chart of a method for regulating a tire pressure of a vehicle in an embodiment of the application.
FIG. 4 is a schematic diagram of a first tire pressure mode in an embodiment of the application.
FIG. 5 is a schematic diagram of a second tire pressure mode in an embodiment of the application.
FIG. 6 is a schematic diagram of a third tire pressure mode in an embodiment of the application.
FIG. 7 is a schematic diagram of a protection tire pressure mode in an embodiment of the application.
FIG. 8 is a schematic diagram of a custom tire pressure mode in an embodiment of the application.
FIG. 9 is a schematic diagram of a compensation tire pressure mode in an embodiment of the application.

### DETAILED DESCRIPTION

Various exemplary embodiments of the present disclosure will now be described in detail with reference to the drawings. It should be noted that the relative arrangement of the components and steps, the numerical expressions, and numerical values set forth in these embodiments do not limit the scope of the present disclosure unless it is specifically stated otherwise.

Techniques, methods and apparatus as known by one of ordinary skill in the relevant art may not be discussed in detail but are intended to be part of the specification where appropriate.

The following description of one or more exemplary embodiments is merely illustrative in nature and is not intended to limit the present disclosure, its application, or uses. Therefore, other exemplary embodiments may have different values, structures, or features.

It should be noted that the same reference numerals and letters refer to the same items in the subsequent figures, and thus once an item is defined in one figure, it may not be further discussed for the subsequent figures.

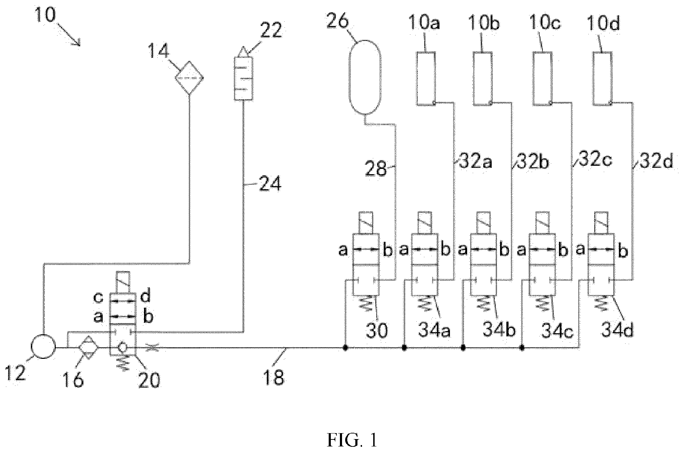

FIG. 1 shows an exemplary system for actively regulating a tire pressure of a vehicle tire, e.g., a central tire inflation system. The system 10 can be applied to a vehicle to independently regulate a tire pressure inside each of tires 10a, 10b, 10c, 10d of the vehicle. The system 10 is configured to be operated when the vehicle is driving. Generally, the system 10 comprises: a human-machine interface (HMI) disposed on a dashboard or at another suitable locations in the vehicle, e.g., the HMI may comprise a touch screen with a display function, etc., and a user may input a user instruction via the HMI, e.g., to indicate a tire pressure request; an air pump 12 configured to be operated to draw air from an environment and produce compressed air, optionally, a filter 14 located upstream of the air pump 12 can filter the air from the environment and/or a dryer 16 located downstream of the air pump 12 can dry the compressed air; a main line 18 used to convey the compressed air from the air pump 12 and configured to be on and off via a first solenoid valve 20; and an exhaust device 22 with a silencer, the exhaust device 22 in fluid communication with the main line 18 via a first branch 24. For instance, the first solenoid valve 20 is configured to be a two-position four-way valve, that is, the first solenoid valve 20 has a first port a in fluid communication with a first interface of the main line 18 that is close to the air pump 12, a second port b in fluid communication with a second interface of the main line 18 that is away from the air pump 12, a third port c in fluid communication with a first interface of the first branch 24 that is close to the air pump 12, and a fourth port d in fluid communication with a second interface of the first branch 24 away from the air pump 12. The first solenoid valve 20 can be switched to a first position (as shown in FIG. 1), e.g., by a movement of a valve core of the first solenoid valve 20, in which the first port a and the second port b are opened such that the first port a is in preferably unidirectional fluid communication with the second port b and the third port c and the fourth port d are closed. The first solenoid valve 20 can be switched to a second position in which the first port a and the second port b are opened such that the first port a is in fluid communication with the second port b and the third port c and the fourth port d are opened such that the third port c is in fluid communication with the fourth port d.

The system 10 further comprises: an air storage tank 26 configured to store a certain amount of the compressed air and in fluid communication with the main line 18 via a second branch 28 that can be on and off via a second solenoid valve 30; and multiple third branches 32a, 32b, 32c, 32d via each of which the tires 10a, 10b, 10c, 10d are in fluid communication with the main line 18 respectively and each of which can be on and off via multiple third solenoid valves 34a, 34b, 34c, 34d. For instance, the second solenoid valve 30 and/or the multiple third solenoid valves 34a, 34b, 34c, 34d is/are configured to be a two-position two-way valve which has a first port a in fluid communication with a first interface of the second air line 28 and/or the multiple third branches 32a, 32b, 32c, 32d that is close to the air pump 12 and a second port b in fluid communication with a second interface of the second air line 28 and/or the multiple third branches 32a, 32b, 32c, 32d that is away from the air pump 12. The second solenoid valve 30 and/or the multiple third solenoid valves 34a, 34b, 34c, 34d can be switched to a first position, e.g. by a movement of a valve core of the second solenoid valve 30 and/or the multiple third solenoid valves 34a, 34b, 34c, 34d, in which the first port a and the second port b are opened to be in fluid communication with each other. The second solenoid valve 30 and/or the multiple third solenoid valves 34a, 34b, 34c, 34d can be switched to a second position (as shown in FIG. 1), in which the first port a and the second port b are closed.

When the air pump 12 is activated, the first solenoid valve 20 and the second solenoid valve 30 are in the first position and the multiple third solenoid valves 34a, 34b, 34c, 34d are in the second position, the compressed air from the air pump 12 is conveyed to the air storage tank 26 via the main line 18 and the second branch 28. When the air pump 12 is activated, the first solenoid valve 20 and at least one of the multiple third solenoid valves 34a, 34b, 34c, 34d are in the first position and the second solenoid valve 30 is in the second position, the compressed air from the air pump 12 is conveyed to at least corresponding one of the tires via the main line 18 and at least corresponding one of the multiple third branches 32a, 32b, 32c, 32d. When the air pump 12 is shut down, the first solenoid valve 20 is in the second position and the second solenoid valve 30 and at least one of the multiple third solenoid valves 34a, 34b, 34c, 34d are in the first position, the compressed air from the air storage tank 26 is conveyed to at least corresponding one of the tires via the second branch 28, the main line 18, and a corresponding one of the multiple third branches 32a, 32b, 32c, 32d. When the air pump 12 is shut down, the first solenoid valve 20 and the second solenoid valve 30 are in the second position and at least one of the multiple third solenoid valves 34a, 34b, 34c, 34d is in the first position, the compressed air from at least corresponding one of the tires is discharged via at least corresponding one of the multiple third branches 32a, 32b, 32c, 32d, the main line 18, the first branch 24, and the exhaust device 22.

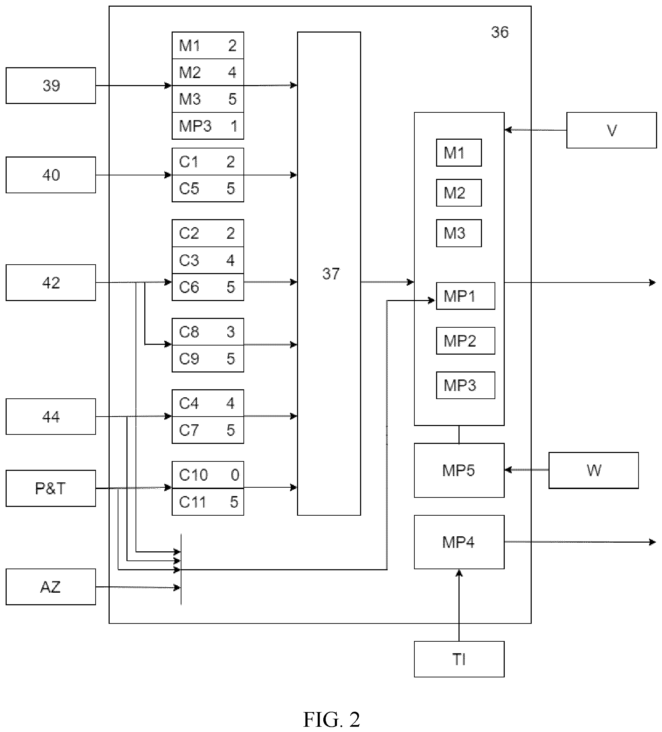

The system 10 further comprises: a direct tire pressure monitoring system (DTPMS) comprising a plurality of tire sensors, each of which can be installed inside each of the tires, on a valve leading to the inside of each of the tires, and/or on a rim on which each of the tires is installed, so as to monitor the tire pressure P and a tire temperature T, e.g., the DTPMS sends a detected value of the tire pressure P and a detected value of the tire temperature T to a remote control receiving module (e.g., Telematic and Connectivity Attendance Module, TCAM) via a wireless transmission signal; and a device 36 for regulating a tire pressure of a vehicle (as shown in FIG. 2). The device 36 comprises: a processor; and a memory coupled to the processor, the memory storing executable instructions, wherein the processor is configured to execute the executable instructions to implement a method for regulating a tire pressure of a vehicle to be described in detail below.

Referring to FIG. 2, the device 36, as a control unit, can be integrated into a suspension electronic control unit (e.g., Suspension Module, SUM) or another suitable control unit of the vehicle. The device 36 can acquire information comprising the tire pressure P and tire temperature T from the TCAM. The device 36 can further acquire a user instruction 39 from the HMI, a weather condition 40, navigation information 42, vehicle information 44, a vehicle speed V and a vehicle load W via a CAN (Controller Area Network) bus. The device 36 analyzes the information for controlling the air pump 12 to be shut down and activated and the first to third solenoid valves to be located at/switched to different positions (i.e., the first and second positions).

The system 10 can further comprise additional solenoid valves and/or other components to ensure the system 10 to be operated effectively.

The weather condition 40 is related to the weather of an environment to be passed by the vehicle and comprises the environment's humidity or temperature. The weather condition 40 can be acquired from a weather forecast and/or based on a real-time detection of a relevant sensor of the vehicle. The navigation information 42 is related to a route to be followed by the vehicle while the vehicle is passing the environment and a predicted road condition on the route. The navigation information 42 can be acquired from a combined satellite positioning and mapping system comprising, e.g., the US Global Positioning System (GPS), the European Galileo Global Navigation Satellite System (GNSS), the Russian Global Navigation Satellite System or Global Navigation Satellite System (GLONASS) or the Chinese Beidou (Compass) satellite navigation system. The combined satellite positioning and mapping system can further comprise a high-definition map (HD-map) generated by crowdsourcing, marked with a large amount of locations, and providing lane-level geographic data and hence providing the predicted road condition on the route. The vehicle information 44 is related to an energy state of the vehicle, which can be divided into sufficient/high and low energy states. The energy state of the vehicle can be reflected by a battery power monitored by a battery management system of the vehicle when the vehicle is driven by a battery and/or reflected by an amount of fuel in a fuel tank detected by a level sensor when the vehicle is driven by an internal combustion engine. Generally, the vehicle speed V acquired from the CAN bus is calculated based on wheel speeds detected by speed sensors installed on wheels of the vehicle. The vehicle load W detected by a vehicle load sensor of the vehicle can indicate the weight of passengers and other items in the vehicle.

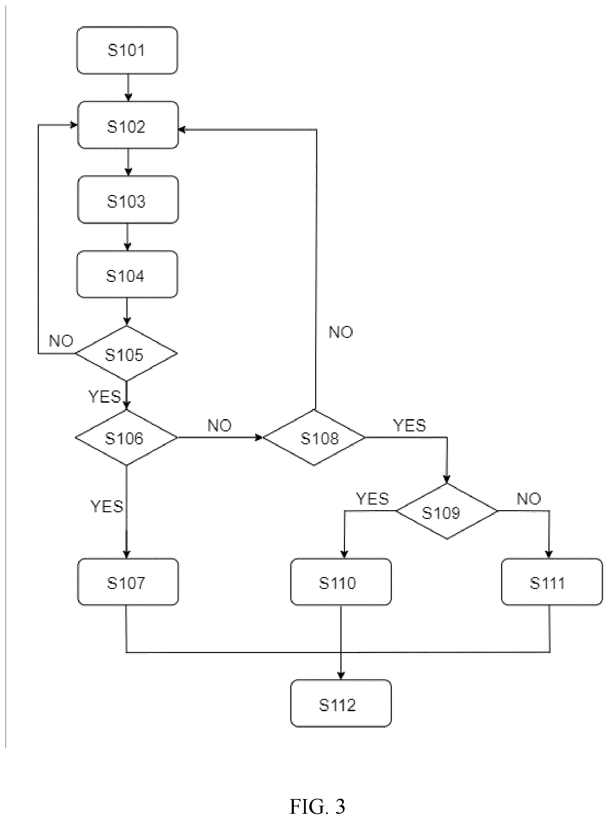

FIG. 3 shows a process of an exemplary method for actively regulating a tire pressure of vehicle.

A plurality of tire pressure modes are set in step 101. Each of the plurality of tire pressure modes defines a reference tire pressure S.

Information is acquired in step 102. The information comprises a value of the vehicle speed V and a value of the tire pressure P while the vehicle is driving, the weather condition 40, the navigation information 42, and the vehicle information 44.

One tire pressure mode is selected automatically from the plurality of tire pressure modes based on the information and a value of a reference tire pressure S in the one tire pressure mode is determined in step 103.

A difference between the acquired value of the tire pressure P and the determined value of the reference tire pressure S is determined in step 104 for regulating the tire pressure P. It should be appreciated that the difference is greater than a difference threshold, i.e., a deflation threshold.

It is evaluated in step 105 whether the acquired value of the vehicle speed V is greater than a vehicle speed threshold (e.g., 10 km/h), whether the vehicle is not steering by using a signal from a steering sensor, and/or whether each of doors, a hood, and a trunk lid of the vehicle are securely closed by using signals from relevant sensors located at each of the doors, the hood, and the trunk lid.

If the evaluated result in step 105 indicates that the acquired value of the vehicle speed V is less than or equal to the vehicle speed threshold, or the vehicle is turning, or at least one of the doors, the hood or the trunk lid is not securely closed (i.e., no), then it is inappropriate to regulate the tire pressure and the process can be returned to step 102. Optionally, the user can be reminded of the reason why it is inappropriate to regulate the tire pressure by means of, e.g., the touch screen, another display or a sound signal.

If the evaluated result in step 105 indicates that the acquired value of the vehicle speed V is greater than the vehicle speed threshold, the vehicle is not turning, and all the doors, the hood and the trunk lid are securely closed (i.e., yes), then the process is moved forward to step 106, in which it is evaluated whether the difference is positive.

If the difference is evaluated as being positive in step 106, then the process is moved forward to step 107, in which a deflation is performed to a corresponding tire detected to have the acquired value of the tire pressure P. For instance, the device 36 can control the air pump 12 to be shut down, the first solenoid valve 20 to be located at/switched to the second position, the second solenoid valve 30 to be located at/switched to the second position, and a corresponding one of the multiple third solenoid valves 34a, 34b, 34c, 34d to be located at/switched to the first position, such that the compressed air inside the corresponding tire can be discharged via a corresponding one of the multiple third branch 32a, 32b, 32c, 32d, the main line 18, the first branch 24, and the exhaust device 22.

If the difference is evaluated as not being positive in step 106, then the difference is evaluated as being negative and then the process is moved forward to inflate the corresponding tire. Or, if the difference is evaluated as not being positive in step 106, then the difference is evaluated as being negative and then the process is moved forward to an optional step 108, in which it is evaluated whether the difference has an absolute value that is greater than an inflation threshold greater than the deflation threshold.

If it is evaluated in the optional step 108 that the absolute value of the difference is less than or equal to the inflation threshold, the tire pressure is not going to be regulated, and the process is returned to step 102.

If it is evaluated in the optional step 108 that the absolute value of the difference is greater than the inflation threshold, then the process is moved forward to inflate the corresponding tire.

For instance, it is evaluated whether the compressed air in the air storage tank 26 is enough to inflate the corresponding tire based on the absolute value of the difference in step 109. If it is evaluated the compressed air in the air storage tank 26 is enough in step 109, then the compressed air in the air storage tank 26 is used to inflate the corresponding tire in step S110. For instance, the device 36 controls the air pump 12 to be shut down, the first solenoid valve 20 to be located at/switched to the first position, the second solenoid valve 30 to be located at/switched to the first position, and the corresponding one of the multiple third solenoid valves 34a, 34b, 34c, 34d to be located at/switched to the first position, such that the compressed air in the air storage tank 26 is conveyed to the corresponding tire via the second branch 28, the main line 18, and the corresponding one of the multiple third branches 32a, 32b, 32c, 32d. If it is evaluated the compressed air in the air storage tank 26 is not enough in step 109, then the compressed air from the air pump 12 is used to inflate the corresponding tire in step S111. For instance, the device 36 controls the air pump 12 to be activated, the first solenoid valve 20 to be located at/switched to the first position, the second solenoid valve 30 to be located at/switched to the second position, and the third solenoid valves 34a, 34b, 34c, 34d to be located at/switched to the first position, such that the compressed air in the air storage tank 26 is conveyed to the corresponding tire via the main line 18 and the corresponding one of the multiple third branches 32a, 32b, 32c, 32d.

A value of the tire pressure P is reacquired at a time interval such as T1 in step 112, and the process is ended when the reacquired value of the tire pressure P is equal to or close to the determined value of the reference tire pressure S, i.e., a difference between the reacquired value of the tire pressure P and determined value of the reference tire pressure S has an absolute value that is less than the deflation threshold or the inflation threshold.

It should be appreciated that in some of the plurality of tire pressure modes, the reference tire pressure S is defined as a function/ dependent variable of the vehicle speed V and the reference tire pressure S has a lower value when the vehicle speed V increases within a specified range and a higher value when the vehicle speed V decreases within the specified range so as to ensure the safety and compliance of the vehicle. Each of the tire pressure modes can be expressed in the form of a curve, table, formula, model, etc.

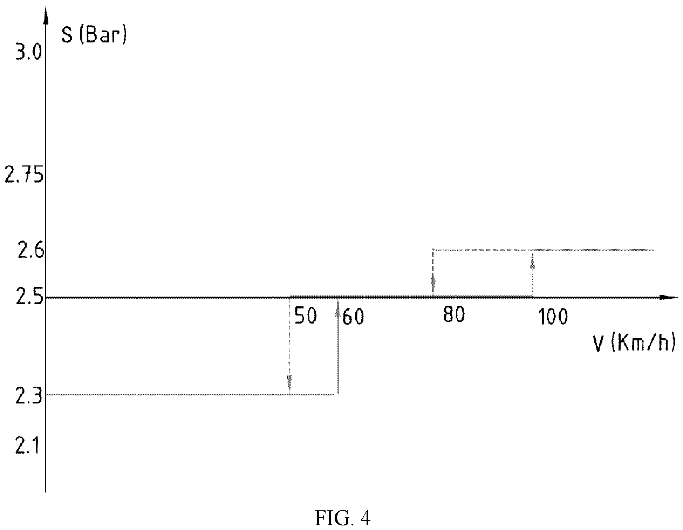

FIG. 4 shows a first tire pressure mode M1 (i.e., a first tire pressure curve) of the plurality of tire pressure modes. Generally, the first tire pressure mode M1 is applicable when the weather condition is at least one of snowy, rainy and foggy, as indicated by C1 in FIG. 2, and/or the first tire pressure mode M1 is applicable when the predicted road condition is at least one of icy, slippery, muddy and unsuitable for driving (e.g., a damaged road), as indicated by C2 in FIG. 2. The first tire pressure mode (M1) specifies its reference tire pressure S has approximately a first reference value (e.g., 2.3 bar) when the vehicle speed V is in a range from zero to less than or equal to a first speed value (e.g., 60 km/h), increases preferably rapidly from approximately the first reference value to and maintained at approximately a second reference value (e.g., 2.5 bar) when the vehicle speed V increases/accelerates to be greater than the first speed value optionally for a first period of time, increases rapidly from approximately the second reference value to and maintained at approximately a third reference value (e.g., 2.6 bar) when the vehicle speed V increases/accelerates to be greater than a second speed value (e.g., 100 km/h) optionally for a second period of time, decreases from approximately the third reference value to and maintained at approximately the second reference value when the vehicle speed V decreases/decelerates to be less than or equal to a third speed value (e.g., 80 km/h) less than the second speed value and greater than the first speed value optionally for a second period of time, decreases from approximately the second reference value to and maintained at approximately the first reference value when the vehicle speed V decreases/decelerates to be less than or equal to a fourth speed value (e.g., 50 km/h) less than the first speed value optionally for a fourth period of time.

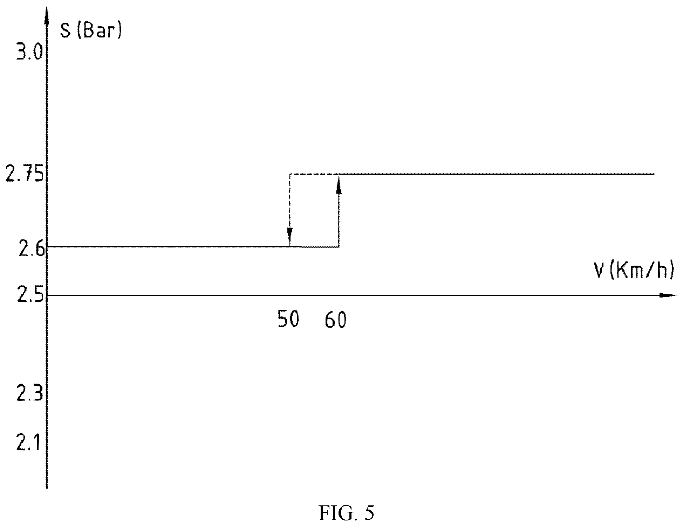

FIG. 5 shows a second tire pressure mode M2 (i.e., a second tire pressure curve) of the plurality of tire pressure modes. Generally, the second tire pressure mode M2 is applicable when the predicted road condition comprises a highway, as indicated by C3 in FIG. 2, and/or the second tire pressure mode M2 is applicable when the energy state of the vehicle is low but sufficient to complete the route in the second tire pressure mode M2, as indicated by C4 in FIG. 2. The second tire pressure mode M2 specifies its reference tire pressure S has approximately a first reference value (e.g., 2.6 bar) when the vehicle speed V is in a range from zero to less than or equal to a first speed value (e.g., 60 km/h), increases from approximately the first reference value to and maintained at approximately a second reference value (e.g., 2.75 bar) when the vehicle speed V increases/accelerates to be greater than the first speed value optionally for a first period of time, decreases from approximately the second reference value to and maintained at approximately the first reference value when the vehicle speed V decreases/decelerates to be less than or equal to a second speed value (e.g., 50 km/h) less than the first speed value optionally for a second period of time.

Optionally, the first speed value in the second tire pressure mode M2 is equal to the first speed value in the first tire pressure mode M1, and/or the second speed value in the second tire pressure mode M2 is equal to the fourth speed value in the first tire pressure mode M1. Thus, the user can intuitively feel a difference between the first and second tire pressure modes under the same value of the vehicle speed V.

Optionally, the first reference value in the second tire pressure mode M2 is equal to the third reference value in the first tire pressure mode M1. Generally, a value of the reference tire pressure S corresponding to a particular value of the vehicle speed V in the second tire pressure mode M2 is greater than a value of the reference tire pressure S corresponding to the particular value of the vehicle speed V in the first tire pressure mode M1 preferably by 2 % to 15%, preferably 4% to 10%.

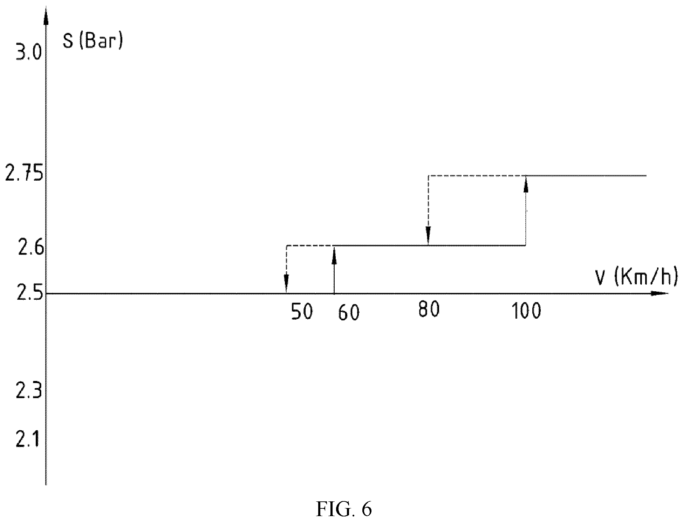

FIG. 6 shows a third tire pressure mode M3 (i.e., a third tire pressure curve) of the plurality of tire pressure modes. The third tire pressure mode M3 is generally applicable when the weather condition is sunny, as indicated by C5 in FIG. 2, and/or the third tire pressure mode M3 is generally applicable when the predicted road condition is suitable for driving, as indicated by C6 in FIG. 2, and/or the third tire pressure mode M3 is generally applicable when the energy state of the vehicle is high and sufficient to complete the route in the third tire pressure mode M3, as indicated by C7 in FIG. 2. The third tire pressure mode M3 specifies its reference tire pressure S has approximately a first reference value (e.g., 2.5 bar) when the vehicle speed V is in a range from zero to less than or equal to the first speed value (e.g., 60 km/h), increases from approximately the first reference value to and maintained at approximately a second reference value (e.g., 2.6 bar) when the vehicle speed V increases/accelerates to be greater than the first speed value optionally for a first period of time, increases from approximately the second reference value to and maintained at approximately a third reference value (e.g., 2.75 bar) when the vehicle speed V increases/accelerates to be greater than a second speed value (e.g., 100 km/h) optionally for a second period of time, decreases from approximately the third reference value to and maintained at approximately the second reference value when the vehicle speed V decreases/decelerates to be less than or equal to a third vehicle speed (e.g., 80 km/h) less than the second speed value and greater than the first speed value optionally for a third period of time, decreases from approximately the second reference value to and maintained at approximately the first reference value when the vehicle speed V decreases/decelerates to be less than or equal to a fourth vehicle speed (e.g., 50 km/h) less than the first speed value optionally for a fourth period of time.

Optionally, at least one of the first to fourth speed values in the third tire pressure mode M3 is equal to at least corresponding one of the first to fourth speed values in the first tire pressure mode M1. Thus, the user can intuitively feel a difference between the first and third tire pressure modes under the same value of the vehicle speed V.

Optionally, the first reference value in the third tire pressure mode M3 is equal to the second reference value in the first tire pressure mode M1. Generally, a value of the reference tire pressure S corresponding to a particular value of the vehicle speed V in the third tire pressure mode M3 is between a value of the reference tire pressure S corresponding to the particular value of the vehicle speed V in the first tire pressure mode M1 and a value of the reference tire pressures S corresponding to the particular value of the vehicle speed V in the second tire pressure mode M2. For instance, a value of the reference tire pressure S corresponding to a particular value of the vehicle speed V in the third tire pressure mode M3 is greater than a value of the reference tire pressure S corresponding to the particular value of the vehicle speed V in the first tire pressure mode M1 by 0 to 10%.

As a specific route can be followed by the vehicle for multiple times, a specific tire pressure mode MP1, as one of the plurality of tire pressure modes, can be generated by a machine learning algorithm, such as at least one of an artificial neural network, a global optimization process, a fuzzy logic algorithm, a cross-correlation function, and a self-learning algorithm, and in which the reference tire pressure S is defined as a function of the vehicle speed V. For instance, when the route is determined to be the specific route, as indicated by C8 in Fig. 2, the specific tire pressure mode MP1 can be recommended instead of e.g. the third tire pressure mode M3, however, when the route is determined not to be the specific route, as indicated by C9 in Fig. 2, e.g., the third tire pressure mode M3 can be recommended instead of the specific tire pressure mode MP1. For instance, when the specific route is followed by the vehicle, a road condition comprising a road roughness on the specific route can be detected by visual sensors comprising a vehicle camera, and a radar, and/or a lidar, an acceleration AZ related to a vibration, shock, or bump of the vehicle on the specific route can be detected by a vehicle motion and position sensor (VMPS), an acceleration sensor, and/or an inertial measurement unit, and the tire pressure P can be detected by the DTPMS, such that the specific tire pressure mode MP1 can be trained/updated based on the road condition, the acceleration AZ, and the tire pressure P.

Optionally, a road condition, an acceleration and a tire pressure detected by another vehicle during its trip on the specific route can be input into the specific tire pressure mode MP1 for training/updating purposes as well.

For instance, the inertial measurement unit comprises at least a 3-axis accelerometer configured to measure accelerations of the vehicle in three axes, i.e., an X-axis running in a longitudinal direction of the vehicle, a Y-axis running in a lateral direction of the vehicle, and a Z-axis running in a vertical direction of the vehicle, to represent a linear motion change of the vehicle. Furthermore, the inertial measurement unit comprises a 3-axis gyroscope configured to measure angular accelerations or rotation angles (i.e., a roll angle, a pitch angle, a yaw angle) of the vehicle about the three axes, to represent a rotation characteristic of the vehicle. Thus, it is possible to use accelerations ay, az of the vehicle in the Y axis and the Z axis and/or angular accelerations ωy, ωz of the vehicle about the Y axis and the Z axis, which are detected by the inertial measurement unit, to determine the acceleration AZ associated with the vibration, shock, or bump of the vehicle on the specific route, reflecting the compliance of the vehicle during its trip on the specific route.

In addition, the acquired value of the tire pressure P here can be used to reflect an energy efficiency of the vehicle during its trip on the specific route. Generally, an increase in the tire pressure is associated with a reduced tire wear and a lower energy consumption, thereby improving the energy efficiency, however, the increase in the tire pressure is likely to cause an increase in the acceleration AZ, which can adversely affect the compliance of the vehicle. As mentioned here, the energy efficiency and the compliance of the vehicle are inversely proportional to a certain extent, that is, an increase in the energy efficiency would lead to a decrease in the compliance, and the increase in the tire pressure P (desired) would lead to the increase in the acceleration AZ (undesired), or a decrease in the tire pressure P (undesired) would lead to a decrease in the acceleration AZ (desired).

Thus, the method further comprises: determining that the route is the specific route based on that the route has been followed by the vehicle for at least one time; acquiring a value of the acceleration AZ while the vehicle is travelling on the specific route such that the specific tire pressure mode MP1 can be updated by the machine learning algorithm based on a trade-off/balance relationship between the acquired value of the tire pressure P and the acquired value of the acceleration AZ. For instance, the trade-off/balance relationship between the acquired value of the tire pressure P and the acquired value of the acceleration AZ can be calculated in the machine learning algorithm using a weight matrix, such that the specific tire pressure mode MP1 is updated to accommodate changes in the tire pressure P and the acceleration AZ of the vehicle on the specific route. This allows the specific tire pressure mode MP1 to be continuously optimized. In addition, the specific tire pressure mode MP1 can be updated using the vehicle information and information from the visual sensors and/or the VMPS.

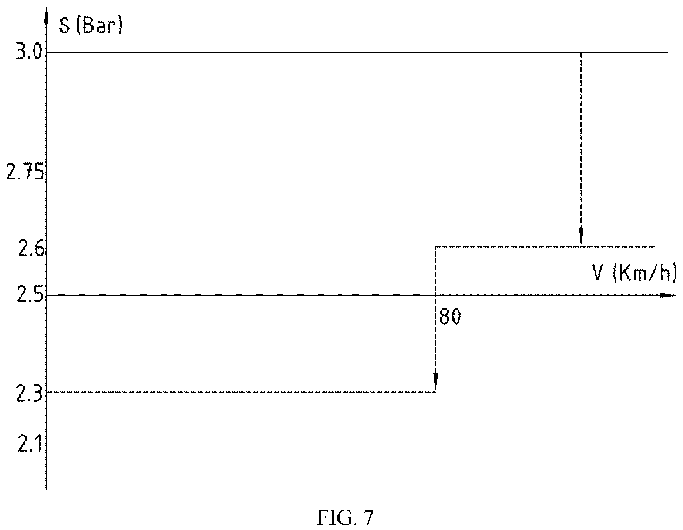

FIG. 7 shows a tire pressure protection mode MP2 of the plurality of tire pressure modes. For instance, the tire pressure protection mode MP2 specifies its reference tire pressure S has a low reference value (e.g., 2.3 bar) when the vehicle speed V is less than or equal to a speed threshold (e.g., 80 km/h) and a high reference value (e.g., 2.6 bar) when the vehicle speed V is greater than the speed threshold, so as to prevent a tire blowout. Optionally, the tire pressure protection mode MP2 is enabled after the vehicle speed V is less than, equal to, or greater than the speed threshold for a period of time. Optionally, the low reference value in the tire pressure protection mode MP2 is equal to the first reference value in the first tire pressure mode M1. Optionally, the high reference value in the tire pressure protection mode MP2 is equal to the third reference value in the first tire pressure mode M1. Generally, the tire pressure protection mode MP2 is applicable when the tire pressure increases to a value greater than a maximum tire pressure limit (e.g., 3.0 bar) due to various reasons. For instance, when the vehicle is driving at a high speed, it is prone to generating a high temperature inside the tire, which can result in an increase in the tire pressure. Thus, the information further comprises an acquired value of the tire temperature T from the DTPMS, and the method further comprises: when the acquired value of the tire pressure P is greater than the maximum tire pressure limit and/or the acquired value of the tire temperature T is higher than the temperature threshold, as indicated by C10 in FIG. 2, selecting the tire pressure protection mode MP2 from the plurality of tire pressure modes; however, when the acquired value of the tire pressure P is less than or equal to the maximum tire pressure limit and/or the acquired value of the tire temperature T is lower than or equal to the temperature threshold, as indicated by C11 in FIG. 2, selecting a tire pressure mode from the plurality of tire pressure modes other than the tire pressure protection mode MP2, e.g., the third tire pressure mode M3 can be recommended, as shown in FIG. 2. Optionally, the tire pressure protection mode MP2 can be converted to a selected tire pressure mode if a reacquired value of tire temperature T falls below the temperature threshold after the tire pressure protection mode MP2 has been engaged for a period of time.

The various periods of time mentioned above can be identical to or distinct from one another.

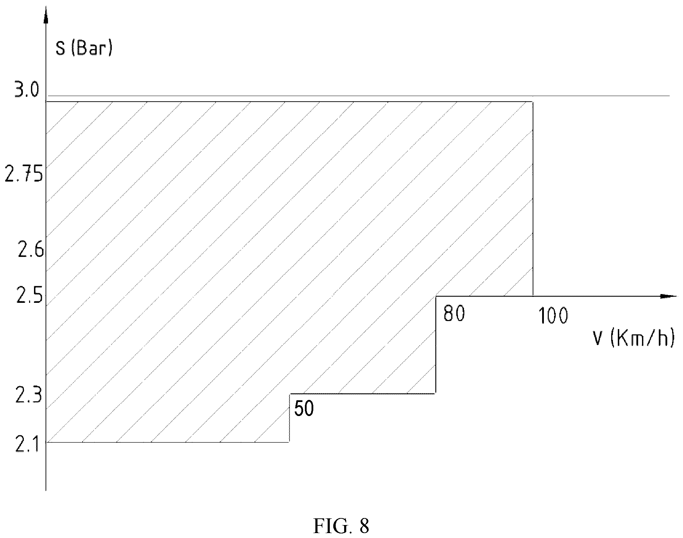

FIG. 8 shows a custom tire pressure mode MP3 that specifies its reference tire pressure S as comprising a plurality of custom reference values within a custom reference range when the vehicle speed V reaches a specified value. For instance, the custom reference range extends from a first custom reference value (e.g., 2.1 bar) to the highest custom reference value approximately 3 bar when the vehicle speed V is less than or equal to a first speed value (e.g., 50 km/h), extends from a second custom reference value (e.g., 2.3 bar) to the highest custom reference value when the vehicle speed V is greater than the first speed value and less than or equal to a second speed value (e.g., 80 km/h), and extends from a third custom reference value (e.g., 2.5 bar) to the highest custom reference value when the vehicle speed V is greater than the second speed value and less than or equal to a third speed value (e.g., 100 km/h), as indicated by a shaded area in FIG8. The safety of the vehicle can be ensured by providing the user with a custom reference range e.g., by means of the HMI, based on the acquired value of the vehicle speed V. Thus, the information further comprises the user instruction 39 from the HMI, and the method comprises: selecting the custom tire pressure mode MP3 from the plurality of tire pressure modes and determining the value of the reference tire pressure S to be equal to one of the plurality of custom reference values when the user instruction 39 indicates that the user has selected the one of the plurality of custom reference values within the custom reference range. That is, when the user instruction 39 does not indicate that the user has selected one of the plurality of custom reference values within the custom reference range, selecting a tire pressure mode from the plurality of tire pressure modes other than the custom tire pressure mode MP3.

Returning to FIG. 2, the user instruction 39 from the HMI can further indicate that the user has selected one of the first to third tire pressure modes M1-M3. The first tire pressure mode M1 is referred to as a comfort tire pressure mode, the second tire pressure mode M2 is referred to as an economy tire pressure mode, and the third tire pressure mode M3 is referred to as a normal tire pressure mode, thereby enhancing the user's understanding of these tire pressure modes when these tire pressure modes are displayed, e.g., on the touch screen or another display.

Priorities are established for each of these tire pressure modes, such that when selecting one tire pressure mode from the plurality of tire pressure modes based on the information, the protection tire pressure mode MP2 has a priority (indicated by 0) that is higher than a priority (indicated by 1) of the custom tire pressure mode MP3, the priority of the custom tire pressure mode MP3 is higher than a priority (indicated by 2) of the first tire pressure mode M1, the priority of the first tire pressure mode M1 is higher than a priority (indicated by 3) of the specific tire pressure mode MP1, the priority of the specific tire pressure mode MP1 is higher than a priority (indicated by 4) of the second tire pressure mode M2, and the priority of the second tire pressure mode M2 is higher than a priority (indicated by 5) of the third tire pressure mode M3. The device 36 comprises a selection module 37 configured to select the one tire pressure mode with the highest priority by evaluating the priorities of the tire pressure modes that are identified based on the information.

Optionally, there is provided a tire pressure mode MP4 for a parked vehicle. The tire pressure mode MP4 is generally applicable when the vehicle is not used for a long time. For instance, the vehicle has been finalized, however, it has not yet exited the factory, the vehicle is in transit, the vehicle is being repaired, the vehicle is parked for a long time, etc., causing the vehicle to be deactivated for a long time. Thus, the method comprises: acquiring a duration TI of vehicle parking using e.g. a timer, and regulating the tire pressure to a tire pressure limit value (such as 3.0 bar) for a parked vehicle based on the duration TI exceeds a time threshold, such as 7 days or more. The tire pressure limit value is equal to the maximum tire pressure limit in the protection tire pressure mode MP2, thereby preventing a part of the tire that contacts a ground from being permanently deformed. When the vehicle is activated, the tire pressure can be regulated to a default value, such as 2.5 bar, and then one tire pressure mode is selected automatically from the plurality of tire pressure modes.

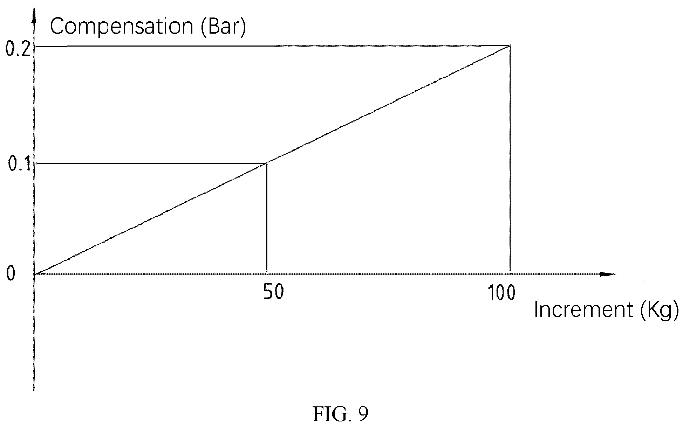

Optionally, FIG. 9 shows a compensation tire pressure mode MP5 that specifies a compensation for the reference tire pressure S as a function of an increment of the vehicle load W relative to a load threshold. Thus, the method comprises: acquiring a value of the vehicle load W when the vehicle is driving; determining an amount of the compensation based on the acquired value of the vehicle load W, i.e., based on the increment of the acquired value of the vehicle load W relative to the load threshold, in the compensation tire pressure mode MP5; and adding the determined amount of the compensation to the determined value of the reference tire pressure S in the selected tire pressure mode to mitigate an impact of such an increment on the tire pressure's performance. The compensation for the reference tire pressure S and the increment has a relationship comprising, but not limited to, a linear relationship, as shown in FIG. 9.

The device 36, in particular the processor of the device 36, has been described in connection with various devices and methods. The processor can be implemented as an electronic hardware, a computer software, or any combination thereof, depending on a specific application and an overall design constraint. For instance, the processor, any part of the processor, or any combination of processors given in this application can be implemented as a microprocessor, a microcontroller, a digital signal processor (DSP), a field programmable gate array (FPGA), a programmable logic device (PLD), a state machine, a gate logic, a discrete hardware circuit, and other suitable processing components configured to perform various functions described in this application. Furthermore, the processor, any part of the processor, or any combination of processors given in this application can be implemented as a software executed by the microprocessor, the microcontroller, the DSP or the other suitable processing components.

The application further provides a machine-readable storage medium storing executable instructions configured to implement, when executed by a processor, the method as described above.

The flow chart and diagrams in the attached drawings show possible architectures, functions and operations enabled by the method, device and machine-readable storage medium in the embodiments of the application. In this regard, each of boxes in the flowchart or diagrams can represent a part of a module, a program segment or an instruction containing one or more of the executable instructions. In some alternative embodiments, functions represented by the boxes can occur in a different order from an order marked in the attached drawings. For instance, two consecutive boxes can actually be executed substantially in parallel and can sometimes be executed in an opposite order, depending on a specific function or action to be realized. It should be noted that each and combinations of the boxes in the flow chart and diagrams can be implemented with a dedicated hardware-based unit that performs a specific function or action, or can be implemented with a combination of dedicated hardware and computer instructions. It is known to those skilled in the art that it is equivalent to implement it by a hardware, a software, and any combination thereof.

Although some specific embodiments of the present disclosure have been demonstrated in detail with examples, it should be understood by those skilled in the art that the above examples are only intended to be illustrative but not to limit the scope of the present disclosure and the above embodiments could be modified without departing from the scope of the present disclosure.

### Clauses

Clause 1. A method for regulating a tire pressure P of a vehicle, comprising: setting a plurality of tire pressure modes, wherein each of the plurality of tire pressure modes defines a reference tire pressure S; acquiring information comprising a value of a vehicle speed V and a value of the tire pressure P while the vehicle is driving, a weather condition, a route to be followed by the vehicle, a predicted road condition on the route, and an energy state of the vehicle; selecting one tire pressure mode from the plurality of tire pressure modes based on the information, and determining a value of a reference tire pressure S in the one tire pressure mode; and determining a difference between the acquired value of the tire pressure P and the determined value of the reference tire pressure S for regulating the tire pressure P, wherein in some of the plurality of tire pressure modes, the reference tire pressure S is defined as a function of the vehicle speed V and has a lower value when the vehicle speed V increases within a specified range and a higher value when the vehicle speed V decreases within the specified range.

Clause 2. The method of clause 1, wherein the some of the plurality of tire pressure modes comprise a first tire pressure mode M1, a second tire pressure mode M2 and a third tire pressure mode M3, the first tire pressure mode M1 is applicable when the weather condition is at least one of snowy, rainy and foggy and/or the predicted road condition is at least one of icy, slippery, muddy and unsuitable for driving; the second tire pressure mode M2 is applicable when the predicted road condition comprises a highway and/or the energy state of the vehicle is low, and the third tire pressure mode M3 is applicable when the predicted road condition is suitable for driving and/or the energy state is high.

Clause 3. The method of clause 2, wherein the first tire pressure mode M1 specifies its reference tire pressure S increases from a first reference value to a second reference value when the vehicle speed V increases to be greater than a first speed value, increases from the second reference value to a third reference value when the vehicle speed V increases to be greater than a second speed value, decreases from the third reference value to the second reference value when the vehicle speed V decreases to be less than or equal to a third speed value, and decreases from the second reference value to the first reference value when the vehicle speed V decreases to be less than or equal to a fourth speed value; and in the first tire pressure mode M1, the fourth speed value is less than the first speed value, and the third speed value is less than the second speed value and greater than the first speed value.

Clause 4. The method of clause 3, wherein the second tire pressure mode M2 specifies its reference tire pressure S increases from a first reference value to a second reference value when the vehicle speed V increases to be greater than a first speed value, and decreases from the second reference value to the first reference value when the speed value V decreases to be less than or equal to a second speed value; and in the second tire pressure mode M2, the second speed value is less than the first speed value.

Clause 5. The method of clause 4, wherein the first speed value in the second tire pressure mode M2 is equal to the first speed value in the first tire pressure mode M1; the second speed value in the second tire pressure mode M2 is equal to the fourth speed value in the first tire pressure mode M1; and/or the first reference value in the second tire pressure mode M2 is equal to the third reference value in the first tire pressure mode M1.

Clause 6. The method of any of clauses 3-5, wherein the third tire pressure mode M3 specifies its reference tire pressure S increases from a first reference value to a second reference value when the vehicle speed V increases to be greater than a first speed value, increases from the second reference value to a third reference value when the vehicle speed V increases to be greater than a second speed value, decreases from the third reference value to the second reference value when the vehicle speed V decreases to be less than or equal to a third speed value, and decreases from the second reference value to the first reference value when the vehicle speed V decreases to be less than or equal to a fourth speed value; and in the third tire pressure mode M3, the fourth speed value is less than the first speed value, and the third speed value is less than the second speed value and greater than the first speed value.

Clause 7. The method of clause 6, wherein the first speed value in the third tire pressure mode M3 is equal to the first speed value in the first tire pressure mode M1; the second speed value in the third tire pressure mode M3 is equal to the second speed value in the first tire pressure mode M1; the third speed value in the third tire pressure mode M3 is equal to the third speed value in the first tire pressure mode M1; the fourth speed value in the third tire pressure mode M3 is equal to the fourth speed value in the first tire pressure mode M1; and/or the first reference value in the third tire pressure mode M3 is equal to the second reference value in the first tire pressure mode M1.

Clause 8. The method of clause 2, wherein some other modes of the plurality of tire pressure modes further comprise a specific tire pressure mode MP1 generated by a machine learning algorithm and in which the reference tire pressure S is defined as a function of the vehicle speed V, the specific tire pressure mode MP1 is applicable when the route is a specific route that has been followed by the vehicle for multiple times, and the method further comprises: determining that the route is the specific route based on that the route has been followed by the vehicle for at least one time; acquiring a value of an acceleration associated with a vibration of the vehicle while the vehicle is driving; and updating the specific tire pressure mode MP1 by the machine learning algorithm at least based on a trade-off relationship between the acquired value of the acceleration and the acquired value of the tire pressure P.

Clause 9. The method of clause 8, wherein when selecting one tire pressure mode from the plurality of tire pressure modes based on the information, the first tire pressure mode M1 has a priority that is higher than a priority of the specific tire pressure mode MP1, the priority of the specific tire pressure mode MP1 is higher than a priority of the second tire pressure mode M2, and the priority of the second tire pressure mode M2 is higher than a priority of the third tire pressure mode M3.

Clause 10. The method of any of clauses 1-9, wherein some other modes of the plurality of tire pressure modes comprise a custom tire pressure mode MP3 that specifies its reference tire pressure S as comprising a plurality of custom reference values when the vehicle speed V reaches a specified value, and the information further comprises an acquired user instruction, and selecting one tire pressure mode from the plurality of tire pressure modes based on the information comprises: selecting the custom tire pressure mode MP3 from the plurality of tire pressure modes and determining the value of the reference tire pressure S to be equal to one of the plurality of custom reference values when the acquired user instruction indicates that the one of the plurality of custom reference values has been selected by a user.

Clause 11. The method of any of clauses 1-10, wherein some other modes of the plurality of tire pressure modes further comprise a protection tire pressure mode MP2 that specifies its reference tire pressure S with a high reference value when the vehicle speed V is greater than a speed threshold and a low reference value when the vehicle speed V is less than or equal to the speed threshold, and the information further comprises an acquired value of a tire temperature T of the vehicle, and selecting one tire pressure mode from the plurality of tire pressure modes based on the information comprises: when the acquired value of the tire pressure P is greater than a maximum tire pressure limit or the acquired value of the tire temperature T is higher than a temperature threshold, selecting the protection tire pressure mode MP2 from the plurality of tire pressure modes.

Clause 12. The method of any of clauses 1-11, further comprising: setting a compensation tire pressure mode MP5 that specifies a compensation for the reference tire pressure S as a function of an increment in a vehicle load W relative to a load threshold; acquiring a value of the vehicle load W; determining an amount of the compensation based on the acquired value of the vehicle load W in the compensation tire pressure mode MP5; and adding the determined amount of the compensation to the determined value of the reference tire pressure S.

Clause 13. The method of any of clauses 1-12, further comprising: acquiring a duration of vehicle parking; and regulating the tire pressure P to a tire pressure limit for a parked vehicle based on the duration exceeds a time threshold.

Clause 14. A device 36 for regulating a tire pressure P of a vehicle, comprising: a processor; and a memory coupled to the processor, the memory storing executable instructions, wherein the processor is configured to execute the executable instructions to implement the method for regulating a tire pressure P of a vehicle of any of clauses 1-13.

Clause 15. A machine-readable storage medium storing executable instructions configured to implement, when executed by a processor, the method for regulating a tire pressure P of a vehicle of any of clauses 1-13.

## Claims

1. A method for regulating a tire pressure (P) of a vehicle, comprising:
setting a plurality of tire pressure modes, wherein each of the plurality of tire pressure modes defines a reference tire pressure (S);
acquiring information comprising a value of a vehicle speed (V) and a value of the tire pressure (P) while the vehicle is driving, a weather condition, a route to be followed by the vehicle, a predicted road condition on the route, and an energy state of the vehicle;
selecting, based on the information, one tire pressure mode from the plurality of tire pressure modes and determining a value of a reference tire pressure (S) in the one tire pressure mode; and
determining a difference between the acquired value of the tire pressure (P) and the determined value of the reference tire pressure (S) for regulating the tire pressure (P),
wherein in some of the plurality of tire pressure modes, the reference tire pressure (S) is defined as a function of the vehicle speed (V) and has a lower value when the vehicle speed (V) increases within a specified range and a higher value when the vehicle speed (V) decreases within the specified range.

2. The method of claim 1, wherein the some of the plurality of tire pressure modes comprise a first tire pressure mode (M1), a second tire pressure mode (M2) and a third tire pressure mode (M3),
the first tire pressure mode (M1) is applicable when the weather condition is at least one of snowy, rainy and foggy and/or the predicted road condition is at least one of icy, slippery, muddy and unsuitable for driving;
the second tire pressure mode (M2) is applicable when the predicted road condition comprises a highway and/or the energy state of the vehicle is low, and
the third tire pressure mode (M3) is applicable when the predicted road condition is suitable for driving and/or the energy state is high.

3. The method of claim 2, wherein the first tire pressure mode (M1) specifies its reference tire pressure (S) increases from a first reference value to a second reference value when the vehicle speed (V) increases to be greater than a first speed value, increases from the second reference value to a third reference value when the vehicle speed (V) increases to be greater than a second speed value, decreases from the third reference value to the second reference value when the vehicle speed (V) decreases to be less than or equal to a third speed value, and decreases from the second reference value to the first reference value when the vehicle speed (V) decreases to be less than or equal to a fourth speed value; and
in the first tire pressure mode (M1), the fourth speed value is less than the first speed value, and the third speed value is less than the second speed value and greater than the first speed value.

4. The method of claim 3, wherein the second tire pressure mode (M2) specifies its reference tire pressure (S) increases from a first reference value to a second reference value when the vehicle speed (V) increases to be greater than a first speed value, and decreases from the second reference value to the first reference value when the speed value (V) decreases to be less than or equal to a second speed value; and
in the second tire pressure mode (M2), the second speed value is less than the first speed value.

5. The method of claim 4, wherein the first speed value in the second tire pressure mode (M2) is equal to the first speed value in the first tire pressure mode (M1);
the second speed value in the second tire pressure mode (M2) is equal to the fourth speed value in the first tire pressure mode (M1); and/or
the first reference value in the second tire pressure mode (M2) is equal to the third reference value in the first tire pressure mode (M1).

6. The method of any of claims 3-5, wherein the third tire pressure mode (M3) specifies its reference tire pressure (S) increases from a first reference value to a second reference value when the vehicle speed (V) increases to be greater than a first speed value, increases from the second reference value to a third reference value when the vehicle speed (V) increases to be greater than a second speed value, decreases from the third reference value to the second reference value when the vehicle speed (V) decreases to be less than or equal to a third speed value, and decreases from the second reference value to the first reference value when the vehicle speed (V) decreases to be less than or equal to a fourth speed value; and
in the third tire pressure mode (M3), the fourth speed value is less than the first speed value, and the third speed value is less than the second speed value and greater than the first speed value.

7. The method of claim 6, wherein the first speed value in the third tire pressure mode (M3) is equal to the first speed value in the first tire pressure mode (M1);
the second speed value in the third tire pressure mode (M3) is equal to the second speed value in the first tire pressure mode (M1);
the third speed value in the third tire pressure mode (M3) is equal to the third speed value in the first tire pressure mode (M1);
the fourth speed value in the third tire pressure mode (M3) is equal to the fourth speed value in the first tire pressure mode (M1); and/or
the first reference value in the third tire pressure mode (M3) is equal to the second reference value in the first tire pressure mode (M1).

8. The method of claim 2, wherein some other modes of the plurality of tire pressure modes further comprise a specific tire pressure mode (MP1) generated by a machine learning algorithm and in which the reference tire pressure (S) is defined as a function of the vehicle speed (V), the specific tire pressure mode (MP1) is applicable when the route is a specific route that has been followed by the vehicle for multiple times, and the method further comprises:
determining that the route is the specific route based on that the route has been followed by the vehicle for at least one time;
acquiring a value of an acceleration associated with a vibration of the vehicle while the vehicle is driving; and
updating the specific tire pressure mode (MP1) by the machine learning algorithm at least based on a trade-off relationship between the acquired value of the acceleration and the acquired value of the tire pressure (P).

9. The method of claim 8, wherein when selecting one tire pressure mode from the plurality of tire pressure modes based on the information, the first tire pressure mode (M1) has a priority that is higher than a priority of the specific tire pressure mode (MP1), the priority of the specific tire pressure mode (MP1) is higher than a priority of the second tire pressure mode (M2), and the priority of the second tire pressure mode (M2) is higher than a priority of the third tire pressure mode (M3).

10. The method of any of claims 1-9, wherein some other modes of the plurality of tire pressure modes comprise a custom tire pressure mode (MP3) that specifies its reference tire pressure (S) as comprising a plurality of custom reference values when the vehicle speed (V) reaches a specified value, and the information further comprises an acquired user instruction, and
selecting one tire pressure mode from the plurality of tire pressure modes based on the information comprises:
selecting the custom tire pressure mode (MP3) from the plurality of tire pressure modes and determining the value of the reference tire pressure (S) to be equal to one of the plurality of custom reference values when the acquired user instruction indicates that the one of the plurality of custom reference values has been selected by a user.

11. The method of any of claims 1-10, wherein some other modes of the plurality of tire pressure modes further comprise a protection tire pressure mode (MP2) that specifies its reference tire pressure (S) with a high reference value when the vehicle speed (V) is greater than a speed threshold and a low reference value when the vehicle speed (V) is less than or equal to the speed threshold, and the information further comprises an acquired value of a tire temperature (T) of the vehicle, and
selecting one tire pressure mode from the plurality of tire pressure modes based on the information comprises:
selecting the protection tire pressure mode (MP2) from the plurality of tire pressure modes when the acquired value of the tire pressure (P) is greater than a maximum tire pressure limit or the acquired value of the tire temperature (T) is higher than a temperature threshold,

12. The method of any of claims 1-11, further comprising:
setting a compensation tire pressure mode (MP5) that specifies a compensation for the reference tire pressure (S) as a function of an increment in a vehicle load (W) relative to a load threshold;
acquiring a value of the vehicle load (W);
determining an amount of the compensation based on the acquired value of the vehicle load (W) in the compensation tire pressure mode (MP5); and
adding the determined amount of the compensation to the determined value of the reference tire pressure (S).

13. The method of any of claims 1-12, further comprising:
acquiring a duration of vehicle parking; and
regulating the tire pressure (P) to a tire pressure limit for a parked vehicle based on that the duration exceeds a time threshold.

14. A device (36) for regulating a tire pressure (P) of a vehicle, comprising:
a processor; and
a memory coupled to the processor, the memory storing executable instructions, wherein the processor is configured to execute the executable instructions to implement the method for regulating a tire pressure (P) of a vehicle of any of claims 1-13.

15. A machine-readable storage medium storing executable instructions configured to implement, when executed by a processor, the method for regulating a tire pressure (P) of a vehicle of any of claims 1-13.
